## Europäisches Patentamt

## European Patent Office

## Office européen des brevets

(11) Publication number: **0 142 610**
**B1**

## EUROPEAN PATENT SPECIFICATION

(45) Date of publication of patent specification: **20.04.88**

(51) Int. Cl.⁴: **C 01 F 7/60**

(21) Application number: **84108634.1**

(22) Date of filing: **21.07.84**

(54) Process for the production of aluminium chloride.

(30) Priority: **26.08.83 GB 8323092**
**18.02.84 GB 8404297**

(43) Date of publication of application:
**29.05.85 Bulletin 85/22**

(45) Publication of the grant of the patent:
**20.04.88 Bulletin 88/16**

(84) Designated Contracting States:
**BE CH DE FR GB IT LI NL SE**

(56) References cited:
**DE-C- 525 186**
**FR-A-2 046 761**
**US-A-4 244 935**

**JOURNAL OF APPLIED CHEMISTRY &
BIOTECH., vol. 29, no. 2, February 1979, pages
107-115, Society of Chemical Industry; R.P.
RAVAL et al.: "Some aspects of the
chlorination of bauxite"**

(73) Proprietor: **SCM CHEMICALS LIMITED**
**77 South Audley Street**
**London W1Y 6AD (GB)**

(72) Inventor: **Robinson, Michael**
**Pink Cottage Ulceby Road**
**Wooton South Humberside (GB)**
Inventor: **Crosby, Alan David**
**1, Morton Close**
**Immingham Grimsby South Humberside (GB)**

(74) Representative: **Madgwick, Paul Roland et al**
**Ladas & Parry Isartorplatz 5**
**D-8000 München 2 (DE)**

Courier Press, Leamington Spa, England.

**Description**

This invention relates to the production of aluminium chloride by the fluidised bed chlorination of alumina in the presence of carbon.

It is well known in the art that alpha-alumina is a difficult to chlorinate material and it has been a widespread practice in the art to avoid any appreciable content of alpha-alumina in raw materials to be chlorinated to produce aluminium chloride. United States Patent No. 4105752, assigned to the Aluminium Company of America, is an expression of this practice in that it relates to the production of aluminium chloride from alumina hydrate the alumina hydrate being calcined to remove water and in such a manner that gamma type alumina predominates in the material to be chlorinated. Gamma alumina is preferred, according to United States Patent No. 4105752, because of its higher reactivity with chlorine and this is illustrated in the patent by a comparison between Examples 2 and 3, Example 2 describing the chlorination of alumina in the gamma form and containing less than 0.5% by weight alpha-alumina at a temperature of 585°C, with almost 100% chlorine utilisation, and Example 3 describing the process carried out under the same conditions except that the alumina contains 24% by weight alpha-alumina with only 45% chlorine utilisation. United States Patent No. 4105752, therefore, is a dramatic illustration of the adverse affect which the presence of alpha-alumina can have on chlorination processes for the production of aluminium chloride.

U.S. Patent 4,244,935 describes the process for chlorinating various metal oxides (including alumina having an alpha content of greater than 0.5%) by coking a carbon source onto particles of the metal oxide, heating the product so as to drive off volatile material and render the coke porous and then treating the product with chlorine in a fluidized bed at a temperature of at least 400°C, to produce a volatile chloride.

According to the broadest aspect thereof the present invention relates the production of aluminium chloride by the chlorination of raw materials containing alpha alumina in a quantity greater than 0.5% and very suitably in a quantity greater than 5.0% by weight for example greater than 50% by weight. According to a further aspect thereof the present invention relates to a combination of the above mentioned aspect with a preceding beneficiation step according to which aluminous material containing iron is selectively chlorinated to remove the iron therefrom under process conditions which have hitherto been avoided as involving the production of alpha-alumina but which need no longer be avoided in view of the ability to chlorinate alpha-alumina according to this invention and which have the other advantages explained hereafter. This combined process provides a particularly efficient and advantageous method of a production of aluminium chloride from aluminous raw materials of the bauxitic type which have been known to be particularly prone to alpha-alumina formation.

The present invention provides, according to the broadest aspect thereof, a process for the production of aluminium chloride by the fluidised bed chlorination of alumina at least 0.5% of which is in the alpha form in the presence of carbon having a surface area of at least 3 $m^2/g$ at a temperature such that the aluminium chloride formed is removed in vapour form in the stream of gases issuing from the fluidised bed and may be thereafter recovered, such process being characterized in that the temperature of chlorination is greater than 775°C, and in that the fluidised bed has an expanded bed depth greater than 2.5 m.

According to a further aspect thereof, the present invention provides a process for the production of aluminium chloride by the fluidised bed chlorination of an iron-containing aluminous material by a process involving in a first stage the beneficiation of the iron-containing aluminous material by the selective fluidised bed chlorination of iron values therein in the presence of a quantity of carbon in excess of the quantity required to react with any oxygen contained in the iron values present in the iron-containing aluminous material or added to the fluidised bed as molecular oxygen, by introducing into the fluidised bed a chlorine containing gas having a concentration of from 20% to 85% by volume of the gases added to the bed, said first stage being characterised by the bed temperature being at least 800°C and such that the iron chloride formed is removed in gaseous form in the gas stream issuing from the bed and, in a later stage, chlorinating the residual alumina values in a fluidised bed in the presence of carbon at a temperature such that the aluminium chloride formed is removed from the bed in gaseous form in the gas stream issuing from the bed, this later stage being characterised in that the carbon is a reactive coke as hereinafter defined, or an active carbon, in that the temperature of chlorination is greater than 775°C and in that the fluidised bed has an expanded bed depth greater than 2.5 m.

This further aspect of the invention is particularly applicable to the production of aluminium chloride from an iron-containing bauxitic material the residual alumina values therein containing at least 0.5% by weight of alpha-alumina after the first beneficiation stage.

Contrary to the teaching of United States Patent No. 4105752 it is found that the present invention provides a high chlorine utilisation despite the presence of alpha-alumina in the alumina from which the aluminium trichloride is to be produced. A further advantage provided by the present invention is that, due to the higher than usual temperature used for the selective chlorination of iron values from the aluminous material, the proportion of ferrous chloride entrained in residual bed material is greatly reduced. This reduces or removes the need to specially treat the residual bed material to remove entrained ferrous chloride or to reduce such ferrous chloride content to a level at which it will not unduly contaminate the aluminium chloride produced in the succeeding stage in the process. The most commonly used expedient for the removal of ferrous chloride from residual bed material has been water washing. This necessitates the use of a succeeding drying step since it is disadvantageous to conduct the further chlorination of the residual bed material in the presence of water. The present invention however enables the residual bed material from a preceding beneficiation step, comprising alumina and excess carbon of that used in the preceding beneficiation step, to be chlorinated directly without water-washing to produce aluminium chloride.

The conditions under which an alumina containing an appreciable proportion of alpha-alumina may be chlorinated will now be described. For the successful implementation of the invention it is important that a deep fluidised bed be used. While the minimum practical depth has been set at greater than 2.5 m it is preferable to use a bed having a depth of at least 2.75 m, particularly preferably at least 3 m and up to, for example, 4.5 m. These dimensions refer to the actual expanded bed depth, not to the reactor enclosing the bed. Preferably, the depth of the bed is such that free chlorine does not break through the bed. The bed depth may be readily adjusted by known means to avoid chlorine breakthrough which may entail the use of a somewhat deeper bed than the minimum defined above.

Preferably, the expanded bed has a height to diameter ratio of at least 2.5, particularly preferably at least 3 and, possibly, at least 4. Preferably, such a bed is operated with a feed of alumina at or near one end of the reactor and an offtake of bed solids from or near the other end of the reactor, either continuous or intermittent in each case, so that a degree of plug flow of solids through the bed is attained, the solids removed from the bed having the longest residence time in the bed, subject, to a degree, to the cycling effect of fluidisation. Preferably the flow of the bed material from inlet to outlet is countercurrent to the flow of chlorine through the bed.

Active carbon is usually used to enable the tempeature of a reaction, which is practicable using other forms of carbon, to be lowered. In the context of the chlorination of alumina it is found that alpha-alumina does not chlorinate satisfactorily in the presence of petroleum coke even at temperatures above 800°C. It is a new application of active carbon to utilise it to chlorinate alpha-alumina at elevated temperature although to do this satisfactorily the specified expanded bed depth must also be used. Active carbon derived from coal and having a surface area of, for example at least 30 m²/g may be used.

It is an advantageous feature of this invention that, as an alternative to active carbon, a reactive form of coke having a surface area of at least 3 m²/g is used, preferably obtained by heating a non-caking or weakly caking coal in the substantial absence of oxygen. The caking quality of coal, is judged by its British Standard Crucible Swelling Number (British Standard 1016 Part 12). The British Standard Swelling Number of the coal is preferably below 6-1/2 and, particularly preferably, from 1/2 to 3-1/2. The surface area is the total surface area judged by low temperature nitrogen absorption after degassing.

In order to produce a coke having a surface area suitable for use according to this invention, fully caking coals must be avoided. Typical of fully caking coals are the ortho-bituminous coals which are commonly used in the production of coke because their swelling properties give the coke particles the physical strength often required in cokes. Fully caking coals give coked products having too low a surface area for use according to this invention and bituminous char, for example, usually has a surface area well below 1.0 m²/g. Cokes of non-coal origin, such as regular calcined petroleum coke, have a similarly unsuitable low surface area. It is found that anthracites, while they produce excellent active carbon when treated under activating conditions, produce carbon products having too low a surface area for use according to this invention when treated under non-activating conditions. True lignites produce carbon having too little physical strength for fluidised bed use. Suitable coals for use in this invention are preferably selected from semi-anthracites, certain semibituminous coals, carbonaceous coals, certain para-bituminous coals and lignitous coals, as defined according to Seyler's Classification, subject to suitable swelling properties. Preferably the coal has a British Standard Crucible Swelling number not above 6½.

The coal is selected to be of fluidisable size, that is at least 37 μm, but is particularly preferably at least 75 μm and up to 4000 μm in diameter, and may suitably have a weight mean average diameter of from 500 to 1200 microns, since it is preferred that the carbon product produced by treating it is used as produced without such need for treatment to alter its particle size and since the above specified sizes are suitable for carbon for fluidised bed use.

The heating of the coal to produce a carbon product usable according to this invention is to be contrasted with activation, which involves heating in the presence of oxygen and, possibly, of an activating gas such as steam or carbon dioxide and involves the combustion of a substantial part of the coal. In such processes the oxygen is often supplied as air. Some oxygen may fortuitously be present during the coal treatment according to the invention but it is preferably in less than 10% by volume of the atmosphere during the heating so that the quantity of carbon combusted may be, preferably, less than 5% by weight and particularly preferably, less than 2.5% by weight.

Where the coal is weakly caking, for example having a British Standard Crucible Swelling Number of from 1 to 3-1/2, it is advantageously subjected to a pre-oxidation treatment to reduce the caking characteristics before the devolatilising heat treatment in the substantial absence of oxygen. Suitably, the pre-oxidation treatment may be conducted in the presence of an air atmosphere or an oxygen atmosphere, preferably of no greater than air concentration but containing at least 10% oxygen by volume, at a temperature of at least 150°C for example from 200°C—250°C and, necessarily, no greater than 350°C for a duration, preferably, of less than 120 minutes, and, particularly preferably, of from 30 minutes to 80

3

minutes. This treatment is suitably conducted in a fluidised bed. The heating in the substantial absence of oxygen is preferably conducted at a temperature of less than 1000°C, for example suitably less than 900°C, very suitably by raising the temperature progressively, from the pre-oxidation temperature where appropriate over a period of from 15 minutes to 150 minutes. This treatment is also preferably conducted in a fluidised bed. The need for pre-oxidation of a weakly caking coal may be reduced or eliminated by blending such a coal with a sufficient portion of a previously devolatilised coal so as to reduce the average caking properties of the blend e.g. to a British Standard Swelling Number of below 1. Where an excess of carbon is used in a chlorination this recycled excess may advantageously be utilised in this manner.

The carbon product so produced may have a surface area of 50 m$^2$/g or more e.g. up to 100 m$^2$/g although lower surface area carbon for example having a total surface area down to below 20 or even down to 15 m$^2$/g or below is usable according to this invention.

The chlorination of the alumina to produce aluminium chloride is preferably conducted at a temperature above 800°C, for example up to 1100°C, a particularly suitable temperature being from 850°C to 1050°C. The alumina is preferably in the form of particles of at least 75 μm and up to 1000 μm in diameter and, suitably, may have a weight mean average particle diameter of 150 to 410 μm.

Since selectivity of chlorination is not required at this stage in the process the concentration of chlorine used is not critical and it may, for example, be added to the fluidised bed as 100% chlorine or, preferably as concentrated chlorine having a concentration of from 60% to 90% v/v. Lower concentrations may be used if desired.

The quantity of active carbon or reactive coke is preferably at least that theoretically required to react with the oxygen content of the alumina, and of any other chlorinatable oxides present in the bed. Provided that the bed has been suitably preheated it should not prove necessary to generate heat internally so that, in this case, an excess of carbon to be combusted with oxygen added to the bed, for example as an air dilution of the chlorine, is not required although, of course, this expedient is not excluded from use.

The gaseous aluminium chloride removed from the fluidised bed may be substantially pure, if the alumina in the bed is substantially pure, or may contain chlorides of other metals present as chlorinatable oxides, or already entrained, in the chloride form, in the alumina.

In practice, the alumina will usually have been derived by a preliminary beneficiation, with other associated process steps, of an iron-containing ore, or other naturally occurring iron-containing aluminous material. As explained above, the ability according to the invention to chlorinate alpha-alumina, results in a particularly advantageous combined process in which an iron-containing aluminous material prone to alpha-alumina formation is beneficiated to produce alumina for final chlorination to produce aluminium trichloride. Examples of such materials are bauxite and bauxitic clays. This aspect of the present invention will be described in relation to bauxite although no limitation of the scope of the invention is intended by this.

Bauxite has the theoretical composition $Al_2O_3xH_2O$ where x=1 or 3 and usually contains a substantial proportion of iron oxide together with oxides of, for example, manganese, magnesium, silicon and titanium. The proportion of iron oxide may vary, for example between 5% and 30% by weight of the ore.

According to normal practice the bauxite is preferably freed of water of crystallisation, by dehydration at a temperature of at least 500°C, preferably from 600°C to 1050°C. The dehydrated material may, for example, contain from 7% to 40% by weight of iron oxide. The dehydration may be accomplished by the combustion of a carbonaceous fuel in, for example, a rotary kiln.

The dehydrated bauxite, preferably still hot as a result of the dehydration step, is fed with the requisite excess of carbon into a fluidised bed reactor where it is contacted with a suitably dilute stream of chlorine-containing gas to attain the required selectivity of chlorination of the iron oxide present in it. This beneficiation step is conducted at an elevated temperature at which the iron chlorides formed, e.g. ferrous chloride, and the other chlorides of minor constituents the oxides of which are substantially equally easily chlorinated as iron oxide, e.g. manganese chloride and magnesium chloride, are substantially wholly in the vapour form and remain so, so that they have little tendency to be retained in the beneficiate in contrast with the situation obtaining where a relatively low temperature is used to avoid alpha-alumina formation at which lower temperature these chlorides are at or near their dew points. Preferably the temperature at this stage of the process is above 800°C, particularly preferably above 850°C, and suitably, up to about 1200°C. Such a temperature may be attained and maintained by the introduction of a suitable quantity of oxygen, for example in the form of air, to achieve the combustion of a proportion of the excess carbon in the bed.

Preferably the concentration of the chlorine in the bed is from 40% v/v to 80% v/v in the total gaseous input into the bed and, preferably, the concentration of oxygen in those gases is not allowed to rise above 10% v/v. If required, this may entail the stepwise addition of oxygen at one or more further points up the bed so that the maximum figure of 10% v/v is not exceeded at any point.

The carbon used in this process stage is preferably a coke or other non-active form of carbon. However, it is possible to use reactive coke prepared as above described from a non-caking or weakly caking coal, preferably having a surface area of less than 50 m$^2$/g at least at the beginning of the beneficiation. Such coke may have been subject to heating in the presence of water vapour prior to use. During the beneficiation process the surface area may increase to more than 50 m$^2$/g. Sufficient excess to provide not only any quantity required for combustion to provide a heat input to the beneficiation reaction but also such quantity as may be required for the subsequent chlorination of the alumina beneficiate is suitably

# 0 142 610

used. Beneficiation reaction is used to preheat the entire alumina/carbon mixture for the subsequent chlorination step and has the effect also, under suitable conditions, of suitably increasing the surface area of the carbon. Preferably the excess of chlorine, expressed as a % of that required to react with the oxygen content of the iron oxide and other chlorinatable oxides present, is at least 15% and where it is to be used in the subsequent chlorination step at least 20% and suitably up to 50%.

The gases leaving the beneficiation reactor contain a considerable quantity of chloride which it is preferred to condense these chlorides to recover them from gaseous contaminants and to revolatise and oxidise them to produce, directly, a sufficiently pure chlorine for recycle to either stage of the process.

These gases inevitably also contain a small proportion of aluminium chloride despite the excellent selectivity given by the beneficiation step. According to a novel feature of this invention the beneficiation step may be conducted in the presence of a small proportion of water vapour to further enhance the degree of selectivity. The water vapour is preferably included in the non-chlorine gaseous input into the fluidised bed, for example in the stream of air or of oxygen and inert gases used to dilute the chlorine and to supply oxygen for bed temperature control purposes. The quantity of water vapour is preferably as low as is found to give an appreciable enhancement of selectivity as shown by a reduction in the quantity of aluminium removed from the bed with the iron chloride. Preferably the reduction is equivalent to at least 0.5% for example from 1% to 5% or more based on the weight of alumina in the beneficiate. The quantity of water vapour is preferably at least 0.01 g, for example at least 0.02 g per g $Cl_2$ fed to the bed and, for example up to 0.2 g per g $Cl_2$ or even more.

It is found that the quantity of aluminium chloride formed during the beneficiation step may be reduced appreciably by the controlled addition of water vapour according to this feature of the invention. However, this feature is advantageously also applicable to any process for the selective removal of iron values from an iron containing aluminous material by chlorination using dilute chlorine, i.e. chlorine having a concentration not more than 85% v/v, in the presence of excess carbon, in a fluidised bed whether or not the remaining alumina or the iron chlorides are further treated according to the present invention.

It is possible to supply the water vapour required by this feature by allowing the requisite quantity of water to remain in the aluminous material during dehydration although this is not as satisfactory method of operation as the inclusion of the water vapour in the fluidising gases. In this case the residual water vapour of the dehydrated aluminous material may be suitably at least 0.002%, for example from 0.003 to 0.1% by weight.

It is desirable for aluminium chloride to be in a highly pure form. The present process lends itself to this and since the use of a high beneficiation temperature acts to lower the quantity of contaminating chlorides in the alumina without the need for an intervening purification step it thereby also lowers the quantity of contaminating metal values in the second stage of the process.

The aluminium chloride produced by the chlorination of the alumina according to the invention is suitably brought into contact with metallic aluminium to purify it from iron chloride which may still be present in a small quantity. Iron chloride vapour present in the aluminium chloride vapour stream will react with the aluminium metal to give a deposit of metallic iron and generate further aluminium chloride.

The aluminium chloride from which residual iron chloride has been removed may be cooled to a temperature such that any iron chloride remaining in it is in solid form and such that the aluminium chloride itself is in vapour form, which temperature is below that of the bed of reductive metal particles, for example, suitably from 250°C to 300°C, and treated to remove the solid particles e.g. by electrostatic methods. A single stage negative polarity electrostatic precipitator may be used although the use of other types of precipitator is not excluded. The voltage drop across the precipitator plates may be from 8 to 12 kv/inch. (315000—47200 v/m). The iron chloride recovered in this manner represents material which would normally contaminate the aluminium chloride product. It inevitably contains in addition aluminium chloride in close admixture. This material may be treated with the iron chloride issuing from the beneficiation step to regenerate chlorine. The purified aluminium chloride so produced may be selectively condensed. The residual gases remaining after the aluminium chloride condensation step comprise the gaseous products of the chlorination reaction being $CO_2$, $SiCl_4$, $TiCl_4$, some remaining $AlCl_3$ and any non reactive gas such as $N_2$ added to the system as purge gas.

The $CO_2$ and $N_2$ may eventually be passed to atmosphere after suitable cleaning. Where such cleaning by water or other liquid scrubbing agents the other constituents would be lost although operation by this means is not precluded. However it is preferable to condense as much as conveniently possible of the remaining chloride vapours for recovery for use either as intermediate chemicals for other purposes or, for treatment to regenerate chlorine from them, for recycle to the process as described above.

The invention will now be illustrated by means of the following Examples 1 to 4(c) in each of which bauxite ore is subjected to a beneficiation stage resulting in alpha-alumina formation followed by a chlorination stage in which it is attempted to chlorinate the alumina content of the beneficiate.

Example 1

This Example comprises the selective chlorination of the iron values in an ore to form a beneficiate followed by chlorination of the beneficiate in the presence of an unreactive coke as reductant.

The apparatus consisted of a vertical cylindrical fused silica reactor of height 3.66 m enclosed in a gas fired furnace. Gases for fluidisation and reaction entered the base of the reactor from metering equipment

5

via a fused silica conical distributor. Products of reaction carried out in the gases passed along a horizontal cooling duct to a cyclone and then to a gas sampling point before disposal, via a caustic scrubber, to atmosphere. Provision was made to admit solids to the reactor via an inlet at the top and to remove solids from the reactor via a cooled pipe at the base.

The reactor (165 mm internal diameter) was charged with a mixture of 40 kg Ghanian bauxite of particle size 0.1 to 1.0 mm diameter which had been calcined at 800°C and 13 kg commercial calcined petroleum coke of particle size 2.0 mm. The surface area of the coke, measured by nitrogen absorption, was 0.2 m²/g. The reactor charge was fluidised by a flow of nitrogen and heated to 950°C. The nitrogen flow was then changed to a flow of a mixture of 12 l/min chlorine, 10 l/min air and 18 l/min nitrogen.

Samples of the solids in the reactor were taken at intervals over a 4 hour period during which period the temperature of the fluidised bed was maintained within the range 970 to 1000°C. No unreacted chlorine was detected, i.e. the chlorine slip in this first part of the process was nil. The fluidising gas was then changed back to nitrogen.

Analysis of the solid samples gave the following results:—

TABLE 1

| Reaction time min | Ore | | | |
| | $Fe_2O_3$ wt% | $Al_2O_3$ wt% | Alpha-$Al_2O_3$ wt% | Carbon surface area m²/g |
|---|---|---|---|---|
| 0 | 16.5 | 70.4 | 0 | 0.2 |
| 160 | 1.4 | 87.8 | | |
| 180 | 1.4 | 89.3 | | |
| 200 | 0.9 | 89.0 | | |
| 220 | 1.0 | 89.8 | | |
| 240 | 1.4 | 88.8 | 50 | 0.1 |

It can be concluded from the above data that the selectivity of attack of iron values was good, giving maximum recovery of aluminium values, and the resulting beneficiate contained a considerable amount of its aluminium oxide content in the alpha-form (50% wt based on total $Al_2O_3$).

Beneficiated bed from a similar experiment was added to the solids remaining in the reactor to give a fluidised bed 2.7 m deep, having a temperature of 980°C with a fluidising nitrogen flow of 40 l/min.

The fluidising gas was changed to a mixture of 30 l/min chlorine and 10 l/min air, at which time the pressure drop across the fluidised bed was 147 mm of mercury (19.5 kPa). Further beneficiated bed was added to the reactor to maintain this pressure drop as the reaction proceeded, and the temperature of the fluidised bed was maintained in the range 980—995°C. Gas analysis showed that chlorine slip (the concentration of unreacted chlorine appearing in the product gases) increased reaching values of 3% when the run was terminated. This degree of chlorine slip showed that under the conditions used the alpha-alumina-containing beneficiate did not chlorinate sufficiently readily for practical application. This example is not according to the invention.

Example 2

This example comprises the selective chlorination of the iron values in the same bauxite as used in Example 1, followed by chlorination of the resulting beneficiate in the presence of a reactive coal coke as reductant.

The process of Example 1 was repeated using as reductant coal coke prepared as follows. Semi-bituminous coal of particle size 2.0 mm was charged into a reactor similar to the chlorination reactor. The charge was fluidised with nitrogen and heated to 800°C over a 30 minute period. After maintaining the temperature at 800°C for a further 30 minutes, the coal coke was removed from the reactor and allowed to cool. The surface area measured by nitrogen absorption was 85 m²/g. As before, during the first part of the process, no chlorine slip occurred. Analysis of the samples of the reactor solids gave the following results.

TABLE 2

| | Ore | | | |
| Reaction time min | Fe₂O₃ wt% | Al₂O₃ wt% | Alpha- Al₂O₃ wt% | Carbon surface area m²/g |
|---|---|---|---|---|
| 0 | 17.2 | 69.9 | 0 | 85 |
| 160 | 13.2 | 69.6 | | |
| 180 | 8.5 | 77.0 | | |
| 200 | 7.2 | 78.8 | | |
| 220 | 6.4 | 80.8 | | |
| 240 | 4.8 | 82.1 | 55 | 150 |

Again, aluminium oxide in the alpha-form had been produced during beneficiation.

The beneficiate was then chlorinated further. During this second part of the experiment the measured chlorine slip was 0.1% indicating an improved utilisation of chlorine compared with Example 1.

For a time, the bed depth reduced to 2.1 m resulting in 3.5% chlorine slip. This reduced to 0.1% when the bed depth was returned to 2.7 m by the addition of further beneficiate.

This Example illustrates the use of a more reactive carbon reductant enabling the alpha-Al₂O₃ to be successfully chlorinated. This Example is according to the invention.

Example 3

This Example comprises the selective chlorination of the iron values in bauxite in the presence of reactive coal coke and water.

46 kg of the same Ghanian bauxite, sieved and calcined as in Example 1, and 15 kg of the same coal coke as used in Example 2 were charged into a reactor of 180 mm internal diameter. This charge was fluidised by a flow of nitrogen and heated to 950°C, then the fluidising gas was changed to a mixture of 14 l/min chlorine, 12 l/min air and 21 l/min nitrogen. The nitrogen component was bubbled through water at 35°C and the mixture conveyed to the reactor through a heated pipe to prevent condensation of water.

Samples of the solids in the reactor were again taken at intervals for a four hour period during which the bed temperature was maintained in the range 970° to 1000°C. No chlorine slip was detected. The fluidising gas was then changed back to nitrogen and the solids removed from the reactor.

Analysis of the samples gave the following results:—

TABLE 3

| | Ore | | |
| Reaction time min | Fe₂O₃ wt% | Al₂O₃ wt% | alpha-Al₂O₃ wt% |
|---|---|---|---|
| 0 | 16.9 | 69.6 | 0 |
| 160 | 8.2 | 75.0 | |
| 180 | 6.8 | 78.5 | |
| 200 | 4.9 | 81.4 | |
| 220 | 3.1 | 79.8 | |
| 240 | 2.0 | 81.8 | 67 |

These figures show that the presence of water vapour during reaction improved the selectivity of iron removal. This Example is according to the invention.

Example 4

This Example comprises the selective chlorination of the iron values in bauxite in the presence of coal coke of intermediate reactivity followed by chlorination of the beneficiate so formed.

*a.* A 180 mm internal diameter reactor was charged with 46 kg Ghanian bauxite, sieved and calcined as in Example 1, and 15 kg of a coal coke prepared by devolatilising anthracite in the manner of Example 2, e.g. in the absence of the bauxite and using a stream of dry nitrogen. The devolatilised anthracite had a surface area of 7 m²/g.

The charge was fluidised by a flow of nitrogen and reacted as described in Example 3 except the nitrogen was not bubbled through water.

No chlorine slip was detected. Carbon recovered from the bed at the end of the four hour reaction period had a surface area of 42 m²/g.

Analysis of the samples of the reactor solids gave the following results:—

TABLE 4a

| Reaction time min | Ore | | Alpha-Al$_2$O$_3$ wt% | Carbon surface area m$^2$/g |
|---|---|---|---|---|
| | Fe$_2$O$_3$ wt% | Al$_2$O$_3$ wt% | | |
| 0 | 17.9 | 69.7 | 0 | 7 |
| 150 | 5.8 | 81.4 | | |
| 180 | 2.2 | 86.9 | | |
| 210 | 2.1 | 87.1 | | |
| 240 | 1.6 | 85.9 | 71 | 42 |

The high selectivity of attack of iron can be seen from these figures resulting from using a less reactive coal coke. Again alpha-Al$_2$O$_3$ was formed.

Beneficiated bed from a repeat run was added to the solids remaining in the reactor to give a fluidised bed 2.6 m deep. The fluidising gas was changed to a mixture of 35 l/min chlorine and 12 l/min air at which time the pressure drop across the bed was 132 mm of mercury (17.5 kPa).

Further beneficiated bed was added to the reactor to maintain this pressure drop as reaction proceeded. Gas analysis showed a chlorine slip of 0.3% and it was judged that the reaction efficiency was borderline although this Example is still according to the invention.

*b.* The experiment of Example 4a was repeated except that the reductant was 19.5 kg of sieved anthracite which was allowed to devolatilise in the presence of bauxite as the charge was heated. This developed an area of 20 m²/gm during devolatilisation due to the presence of water in the bauxite.

Carbon recovered from the bed after beneficiation had a surface area of 60 m²/g and analysis of the samples of bed solids gave the following results:—

TABLE 4b

| Reaction time min | Ore | | Alpha-Al$_2$O$_3$ wt% | Carbon surface area m$^2$/g |
|---|---|---|---|---|
| | Fe$_2$O$_3$ wt% | Ore Al$_2$O$_3$ wt% | | |
| 0 | 17.5 | 69.1 | 0 | 20 |
| 150 | 4.2 | 86.3 | | |
| 180 | 2.0 | 90.7 | | |
| 210 | 1.8 | 89.8 | | |
| 240 | 1.7 | 91.3 | 65 | 60 |

These figures show a selectivity very much the same as in Example 4a when the carbon surface area was 42 m²/g. Alpha-Al$_2$O$_3$ was formed as before.

During the chlorination of the beneficiate the measured chlorine slip was 0.1% showing that the higher carbon surface area caused efficient chlorination of the alumina. This Example is according to the invention.

*c.* The beneficiation part of Example 4a was repeated using anthracite from a different source.

In this experiment the surface area of the devolatilised anthracite was 1.5 m²/g and the carbon recovered from the bed had a surface area of only 7 m²/g. The beneficiate analysed 91.8% Al₂O₃, 0.4% Fe₂O₃ and behaved during beneficiation as did Example 1. The alpha-alumina content was 78%. It can be deduced from the foregoing examples that this carbon would not enable the alpha-alumina to be efficiently chlorinated in the second process stage.

After the beneficiation stage, the fluidising gas was changed to nitrogen humidified at 55° to 60°C, in the manner described in Example 3 and the bed of beneficiate was fluidising in this humidified nitrogen for four hours. Carbon recovered from the bed after this treatment was found to have a surface area of 70 m²/g.

This beneficiated bed was then further chlorinated as described in Example 4a using as feed, to maintain the bed height constant during the course of the process, beneficiate containing carbon of a similar surface area from other runs.

During this further chlorination the chlorine slip was no higher than 0.1%.

This example is as according to the invention and illustrates the use of a coal coke of intermediate reactivity in beneficiation to give an acceptable selectivity of attack of iron. Since coals are natural and variable substances a particular coal may or may not give a coke during the beneficiation stage having a sufficient reactivity to chlorinate the alumina efficiently. If not, it can be seen that a moderate degree of heat treatment of the carbon if necessary in the presence of water vapour, will achieve the necessary activation and utilising this technique anthracite can provide a satisfactory carbon for the chlorination of alpha-alumina.

**Claims**

1. A process for the production of aluminium chloride by the fluidised bed chlorination of alumina at least 0.5% of which is in the alpha form in the presence of carbon having a surface area of at least 3 m²/g at a temperature such that the aluminium chloride formed is removed in vapour form in the stream of gases issuing from the fluidised bed and may be thereafter recovered, such process being characterized in that the temperature of chlorination is greater than 775°C, and in that the fluidised bed has an expanded bed depth greater than 2.5 m.

2. A process as claimed in claim 1, wherein the fluidised bed has an expanded bed depth of from 2.75 m to 4.5 m.

3. A process as claimed in claim 1 or 2, wherein the expanded fluidised bed has a height to diameter ratio of at least 4.

4. A process as claimed in any one of claims 1 to 3, wherein the fluidised bed is operated with a continuous or intermittent flow of solids countercurrent to the flow of chlorine through the bed.

5. A process as claimed in any one of claims 1 to 4, wherein the carbon has a surface area greater than 20 m²/g.

6. A process as claimed in any one of claims 1 to 5, wherein the temperature of chlorination of the alumina is from 800°C, to 1100°C.

7. A process as claimed in any one of claims 1 to 6, wherein the alumina containing at least 5% by weight alpha-alumina has been produced by a process involving the beneficiation of an iron-containing aluminous material by the selective fluidised bed chlorination at a temperature of at least 800°C, of iron values therein in the presence of a quantity of carbon in excess of the quantity required to react with any oxygen contained in the iron values present in the iron-containing aluminous material or added to the fluidised bed as molecular oxygen, by introducing into the fluidised bed a chlorine containing gas having a concentration of from 20% to 85% by volume of the gases added to the bed, removing the iron chloride formed in gaseous form in the gas stream issuing from the bed to leave an alumina-containing residue.

8. A process as claimed in claim 7, wherein the iron-containing aluminous material is a bauxite which has been freed of water of crystallisation.

9. A process as claimed in claim 7 or 8, wherein the carbon used in the beneficiation is a coke which has a surface area of less than 50 m²/g at the beginning of the beneficiation which surface area increases in the course of the beneficiation to at least 50 m²/g and in that excess coke remaining after the completion of the beneficiation is used for the chlorination of the alumina residue.

10. A process as claimed in claim 9, wherein the coke is heated in the presence of water vapour before use for the chlorination of the alumina residue.

11. A process as claimed in any preceding claim, wherein the alumina contains at least 5.0% by weight of alpha-alumina.


**Patentansprüche**

1. Verfahren zum Erzeugen von Aluminiumchlorid durch die Wirbelschichtchlorierung von Tonerde, die sich zu mindestens 0,5% in der α-Form befindet, in Gegenwart von Kohlenstoff mit einer spezifischen Oberfläche von mindestens 3 m²/g und bei einer solchen Temperatur, daß das Aluminiumchlorid in Dampfform mit dem aus der Wirbelschicht austretenden Gasstrom entfernt wird und danach zurückgewonnen werden kann, dadurch gekennzeichnet, daß die Chlorierung bei einer Temperatur über 775°C durchgeführt wird und die Tiefe der expandierten Wirbelschicht größer ist als 2,5 m.

2. Verfahren nach Anspruch 1, dadurch gekennzeichnet, daß die expandierte Wirbelschicht eine Tiefe von 2,75 bis 4,5 m hat.

3. Verfahren nach Anspruch 1 oder 2, dadurch gekennzeichnet, daß das Verhältnis der Höhe zum Durchmesser der expandierten Wirbelschicht mindestens 4 beträgt.

4. Verfahren nach einem der Ansprüche 1 bis 3, dadurch gekennzeichnet, daß die Wirbelschicht mit im Gegenstrom zu der durch die Schicht tretenden Strömung des Chlors mit einer kontinuierlichen oder intermittierenden Feststoffströmung betrieben wird.

5. Verfahren nach einem der Ansprüche 1 bis 4, dadurch gekennzeichnet, daß der Kohlenstoff eine spezifische Oberfläche über 20 m²/g besitzt.

8. Verfahren nach einem der Ansprüche 1 bis 5, dadurch gekennzeichnet, daß die Tonerde bei einer Temperatur von 800 bis 1100°C chloriert wird.

7. Verfahren nach einem der Ansprüche 1 bis 6, dadurch gekennzeichnet, daß die mindestens 5 Gew.% α-Tonerde enthaltende Tonerde in einem Verfahren erzeugt worden ist, in dem ein eisenhaltiges Aluminiumgut zu seiner Veredelung bei einer Temperatur von mindestens 800°C einer selektiven Wirbeschichtchlorierung des darin enthaltenen Eisengutes in Gegenwart von Kohlenstoff unterworfen wird, der in einer Menge vorhanden ist, die größer ist als die Menge, die für eine Reaktion mit dem Sauerstoff erforderlich ist, der gegebenenfalls in dem Eisengut enthalten ist, das in dem eisenhaltigen Aluminiumgut enthalten ist, oder der als molekularer Sauerstoff in die Wirbelschicht eingebracht wird, wobei zu dieser Chlorierung in die Wirbelschicht ein chlorhaltiges Gas eingeleitet wird, in dem die in die Schicht eingebrachten Gase in eine Konzentration von 20 bis 85 Vol.% enthalten sind, und das gebildete Eisenchlorid von der Wirbelschicht in Gasform in dem von der Wirbelschicht abgegebenen Gasstrom entfernt wird, so daß ein tonerdehaltiger Rückstand zurückbleibt.

8. Verfahren nach Anspruch 7, dadurch gekennzeichnet, daß das eisenhaltige Aluminiumgut ein Bauxit ist, der von Kristallwasser befreit werden ist.

9. Verfahren nach Anspruch 7 oder 8, dadurch gekennzeichnet, daß der zum Veredeln verwendete Kohlenstoff ein Koks ist, der zu Beginn der Veredelung eine spezifische Oberfläche von weniger als 50 m²/h hat, daß diese spezifische Überfläche im Verlauf der Veredelung auf mindestens 50 m²/g zunimmt und daß nach vollständiger Durchführung der Veredelung verbleibender, überschüssiger Koks zum Chlorieren des Tonerderückstandes verwendet wird.

10. Verfahren nach Anspruch 9, dadurch gekennzeichnet, daß der Koks vor seiner Verwendung zum Chlorieren des Tonerderückstandes in Gegenwart von Wasserdampf erhitzt wird.

11. Verfahren nach einem der vorhergehenden Ansprüche, dadurch gekennzeichnet, daß die Tonerde mindestens 5,0 Gew.% α-Tonerde enthält.

**Revendications**

1. Procédé de préparation du chlorure d'aluminium par chloration en lit fluidisé d'alumine dont au moins 0,5% et sous la forme alpha, en présence de carbone ayant une surface spécifique d'au moins 3 m²/g à une température telle que le chlorure d'aluminium formé est évacué sous la forme de vapeur dans le courant de gaz issu du lit fluidisé et de sorte qu'il peut être ensuite récupéré, ce procédé étant caractérisé en ce que la température de chloration est supérieure à 775°C et en ce que le lit fluidisé a une profondeur de lit expansé supérieure à 2,5 m.

2. Procédé suivant la revendication 1, dans lequel le lit fluidisé a une profondeur de lit expansé de 2,75 m à 4,5 m.

3. Procédé suivant la revendication 1 ou 2, dans lequel le lit fluidisé expansé a un rapport de la hauteur au diamètre d'au moins 4.

4. Procédé suivant l'une quelconque des revendications 1 à 3, dans lequel on fait fonctionner le lit fluidisé avec un courant continu ou intermittent de solides s'écoulant à contre-courant du courant de chlore à travers le lit.

5. Procédé suivant l'une quelconque des revendication 1 à 4, dans lequel le carbone a une surface spécifique supérieure à 20 m²/g.

6. Procédé suivant l'une quelconque des revendications 1 à 4, dans lequel la température de chloration de l'alumine est de 800°C à 1100°C.

7. Procédé suivant l'une quelconque des revendications 1 à 6, dans lequel on a préparé de l'alumine contenant au moins 5% en poids d'alumine alpha par un procédé mettant en oeuvre l'enrichissement d'un matériau à base d'aluminium contenant du fer par chloration sélective en lit fluidisé à une température d'au moins 800°C des composés à base de fer contenus, en présence d'une quantité de carbone en excès par rapport à la quantité nécessaire pour réagir avec l'oxygène contenu dans les composés à base le fer qui sont présents dans le matériau à base d'aluminium contenant du fer, ou ajouté dans le lit fluidisé sous la forme d'oxygène moléculaire; en introduisant dans le lit fluidisé un gaz contenant du chlore ayant une concentration de 20% à 85% en volume par rapport aux gaz ajoutés dans le lit; en évacuant le chlorure de fer formé sous forme gazeuse dans le courant de gaz issu du lit afin de laisser un résidu contenant de l'alumine.

8. Procédé suivant la revendication 7, dans lequel le matériau à base d'aluminium contenant du fer, est une bauxite libérée de l'eau de cristallisation.

9. Procédé suivant la revendication 7 ou 8, dans lequel le carbone utilisé dans l'enrichissement est un coke qui a une surface spécifique inférieure à 50 m²/g au début de l'enrichissement, cette surface spécifique augmentant pendant l'enrichissement jusqu'à au moins 50 m²/g, et dans lequel on utilise l'excès de coke restant après la fin de l'enrichissement pour la chloration du résidu d'alumine.

10. Procédé suivant la revendication 9, dans lequel le coke est chauffé en présence de vapeur d'eau avant d'être utilisé pour la chloration du résidu d'alumine.

11. Procédé suivant l'une quelconque des revendications précédentes, dans lequel l'alumine contient au moins 5,0% en poids d'alumine alpha.